# EUROPEAN PATENT SPECIFICATION

(11) **EP 3 566 838 B1**
(45) Date of publication and mention of the grant of the patent: **10.03.2021**
(21) Application number: 19172954.0
(22) Date of filing: 07.05.2019
(51) Int. Cl.: B27D 5/00, B23Q 11/00

(54) **EDGE-BANDING MACHINE AND METHOD FOR OPERATING SAID EDGE-BANDING MACHINE**
KANTENANLEIMMASCHINE UND BETRIEBSMETHODE
MACHINE DE PLAQUAGE DE CHANTS ET PROCÉDÉ D'UTILISATION DE LADITE MACHINE

(30) Priority: 07.05.2018 IT 201800005129
(43) Date of publication of application: 13.11.2019
(73) Proprietor: Fravol Export S.r.l., 35010 Peraga di Vigonza (PD) (IT)
(72) Inventor: VOLPATO, Andrea, I-35010 Vigonza (PD) (IT)
(74) Representative: Caldon, Giuliano

(56) References cited:
- EP-A1- 1 459 839
- FR-A1- 2 870 763
- IT-A1- UA20 163 744

## Description

The present invention regards an edge-banding machine and a method for operating said edge-banding machine, corresponding respectively to the preamble of claim 1, and to claim 9. Such device and method are known from IT UA20 163 744 A1.

The present edge-banding machine is intended to be advantageously employed for executing the application of coating edges on panels of different materials such as wood, chip, multilayer, MDF, etc.

In particular, the present edge-banding machine is provided with a milling device adapted to execute the facing of the coating edges by linearly cutting the ends of such edges, and/or executing the rounding of the coating edges by carrying out an angular working of connection and rounding at the ends of the coating edges in order to continuously connect, without interruption, the orthogonal faces of the panels.

### State of the art

In the industry for working wood, in particular in the furniture industry, the panels are finished by means of the application of border strips which come to form the coating edges of the panels and which are then worked by rounding the edges thereof according to the desired profiles.

For such purpose, edge-banding machines have been introduced on the market which are adapted to apply the coating edges on the sides of the panels and are provided with operative units adapted to execute the necessary finishing operations for the edges themselves.

In particular, edge-banding machines are known of monolateral type, which are adapted to apply one edge to only one side of the panel with each passage of the panel through the edge-banding machine.

More in detail, the edge-banding machines of known type comprise a support frame provided with a slide guide extended between an inlet port and an outlet port, and movement means (for example obtained by means of a slidable strip) adapted to move the panels to advance along the slide guide from the inlet port to the outlet port.

The edge-banding machine also comprises a storage station adapted to house a border strip to be applied to the panels and which will form the coating edge thereof. More in detail, such storage station comprises a rotatable support which carries the border strip wound thereon and is actuatable to rotate in order to unwind the border strip along the sliding lane, in order to apply the border strip to the side of the panel.

The edge-banding machine comprises a grinding/refacing unit placed along the sliding lane downstream of the inlet port and provided with one or more cutters adapted to operate on the side of the panel in order to eliminate the irregularities thereof.

The edge-banding machine also comprises a gluing unit placed downstream of the grinding/refacing unit and adapted to deposit, on the side of the panel, a layer of glue (e.g. of hot-melt type) and to compress, by means of two or more rollers, the border strip on the glue layer in order to glue the strip to the side of the panel. The grinding/refacing unit is provided with a cutting tool adapted to cut the border strip at the rear end of the panel.

The border strip glued to the panel by means of the aforesaid gluing unit has length greater than the panel and width greater than the thickness of the panel itself, in a manner such that border strip projects with respect to the ends and with respect to the longitudinal flanks of the side of the panel.

The edge-banding machine also comprises a facing unit arranged downstream of the gluing unit and provided with a circular saw adapted to cut the portions of the border strip that project beyond the ends of the side of the panel, linearly cutting the ends of the border strip substantially flush with the ends of the side of the panel.

The edge-banding machine also comprises a trimming unit arranged downstream of the facing unit and adapted to cut the portions of the border strip that project beyond the longitudinal flanks of the side of the panel.

The edge-banding machine also comprises a rounding unit placed downstream of the trimming unit and provided with a milling device adapted to round the ends of the border strip in order to continuously connect, without interruption, the external surface of the border strip with the adjacent orthogonal side of the panel.

In particular, the milling device of the rounding unit is provided with a rotary milling tool peripherally having multiple cutting teeth, each of which provided with a curved profile with curvature radius equal to the thickness of the border strip in order to correctly connect the two panel faces at 90 degrees.

In operation, with reference to the monolateral edge-banding machines, it is necessary to execute a passage of the panel through the operative units of the machine for each side of the panel.

More in detail, in each passage, an operator must introduce the panel in the edge-banding machine at the inlet port of the latter, in a manner such that the movement means of the edge-banding machine carry the panel to the operative units arranged along the sliding lane up to reaching the outlet port.

In the first two passages of the panel through the edge-banding machine, the coating edges are applied on the two longitudinal sides of the panel that are parallel and opposite each other.

During such first two passages the facing unit is actuated to cut, in a rectilinear manner, the ends of the border strip flush with the ends of the corresponding side of the panel, while the rounding unit is disabled.

In the last two passages of the panel through the edge-banding machine, the coating edges are applied on the two end faces of the panel orthogonal to the aforesaid longitudinal faces of the panel itself.

During such last two passages, the facing unit is disabled, while the rounding unit is actuated in order to round the ends of the border strip applied to the end face of the panel, in a manner such to continuously connect, without interruption, the external surface of such border strip with the external surface of the border strip applied to the adjacent longitudinal face of the panel.

In particular, the milling device of the rounding unit is adapted to follow the panels during their translation travel along the sliding lane in order to achieve the angular rounding of the edges of the coating edges at the ends of the panels which advance. During the cutting of the coating edges of the panel, so as to maintain the milling tool constantly at a precise distance from the edges themselves, the milling device comprises a front coupler and a vertical coupler adapted to abut against the panel during the cutting operations.

Rounding units with Cartesian movement are known in the state of the art, in which the milling device is movable, by means of suitable guides and actuators, to execute translation movements that are parallel and orthogonal to the slide direction of the panels, so as to follow the latter and simultaneously execute the working on the coating edges at the ends of the panels.

In addition, rounding units with rotational-translational movement are known, provided with a carriage that is slidable (parallel to the slide direction of the panels) on which the milling device is mounted by means of a rotatable support having horizontal rotation axis. When the carriage follows the panel, the milling device completes a first working on the edge of the frontal face of the panel by rotating 180 degrees. Subsequently, the carriage stops its travel and waits for the passage of the rear end of the panel, which it then starts to follow in order to allow the milling device to complete a second working on the edge of the rear end of the panel, completing a further rotation of another 180 degrees.

The cutting operations executed by the edge-banding machine, and in particular by the milling device of the rounding unit, generate the production of a significant quantity of chips, which must be suitably evacuated both by law and in order to ensure an optimal finish of the coating edges of the panel.

In particular, the produced chips tend to remain at the cutter, dirtying the machine, and above all they tend to be accumulated on the surface of the panel, preventing the couplers of the milling device to precisely adhere on the surface of the panel, since they cause jumping of the couplers (and hence of the device), which causes poor edge working quality.

In order to remove the chips, the edge-banding machines of conventional type are provided with suction devices which comprise one or more suction mouths arranged on the side of the milling device and connected by means of flexible connection pipes to a suction plant. The latter is adapted to generate, within the suction mouths, reduced pressure for suctioning the chips into the mouths themselves and evacuating them from the latter through the flexible connection pipes. In particular, the suction mouths are fixed to the milling device in order to follow the movement thereof during the cutting operations.

Such solution of known type, however, even if usable in the rounding units with Cartesian movement, is not adapted to be applied to rounding units with rotational-translational movement, since the conveyance pipes are not able to adequately follow the rotations of the milling/cutting unit, and in particular they occupy considerable size during their movement and are subjected to bending that could facilitate the breakage thereof.

### Presentation of the invention

In this situation, the problem underlying the present invention is therefore that of overcoming the drawbacks shown by the solutions of known type by providing an edge-banding machine and a method for operating such edge-banding machine, which allow efficiently evacuating the chips produced by the working of the panels, in particular in the presence of rotation movements of the milling head of the milling device of the edge-banding machine.

Another object of the present invention is to provide an edge-banding machine which is capable of operating in an entirely efficient and reliable manner.

Another object of the present invention is to provide an edge-banding machine of limited size.

Another object of the present invention is to provide an edge-banding machine which is structurally simple and inexpensive to achieve.

### Brief description of the drawings

The technical characteristics of the invention, according to the aforesaid objects, can be clearly seen in the contents of the below-reported claims and the advantages thereof will be more evident in the following detailed description, made with reference to the enclosed drawings, which represent a merely exemplifying and non-limiting embodiment of the invention, in which:
- figure 1 shows a perspective view of one example of the edge-banding machine, object of the present invention;
- figure 2 shows a side view of the edge-banding machine illustrated in figure 1;
- figure 3 shows a perspective view of a milling device of the edge-banding machine, object of the present invention, in a first rest position;
- figures 4-7 show corresponding positions of the milling device during the rotation of the milling head for working a panel;
- figure 8 shows a perspective view of the milling device in a second rest position;
- figure 9 shows a perspective view of the milling device with some parts removed relative to the suction means, in order to allow better underlining other parts of the milling device itself;
- figure 10 shows a first perspective view of a detail of the milling device relative to a movable tank of the suction means;
- figure 11 shows a second perspective view of the movable tank of the milling device;
- figure 12 shows a first partially sectional view of the movable tank;
- figure 13 shows a second partially sectional view of the movable tank;
- figure 14 shows a detail relative to a milling tool of the present milling device, during an operation of facing the coating edge of the panel;
- figure 15 shows the milling tool of the milling device during an operation of rounding the coating edge of the panel.

### Detailed description of a preferred embodiment

With reference to the enclosed drawings, reference number 100 overall indicates the edge-banding machine, object of the present invention.

The present edge-banding machine 100 is adapted to execute the application of coating edges on panels made for example of wood, chip, multilayer, MDF (Medium-density fiberboard), etcetera.

As described in detail hereinbelow, the edge-banding machine 100 comprises a milling device 1, which is intended to execute on the coating edges of the panels rounding operations or facing operations, or (with reference to the particular embodiment illustrated hereinbelow) both of the aforesaid operations.

Conventionally, each panel P has substantially parallelepiped shape and is provided with two main faces, generally coated, parallel to and opposite each other and connected together perimetrically by four sides L that are two-by-two parallel, which define the thickness of the panel P itself.

Each side L of the panel P is longitudinally extended between a front end edge and a rear end edge and is delimited width-wise by two longitudinal flanks that are preferably parallel to each other.

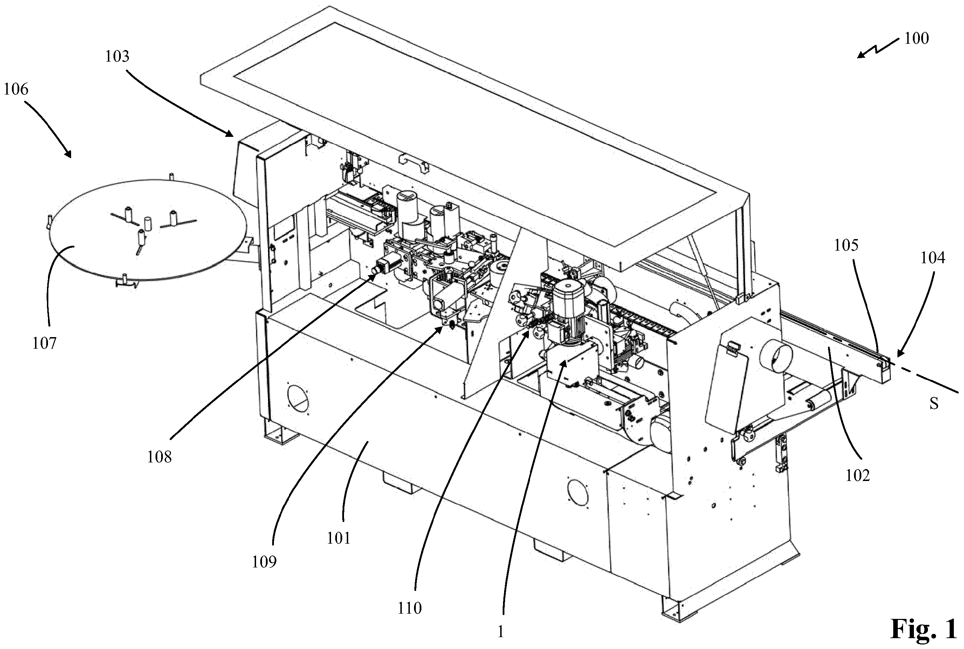

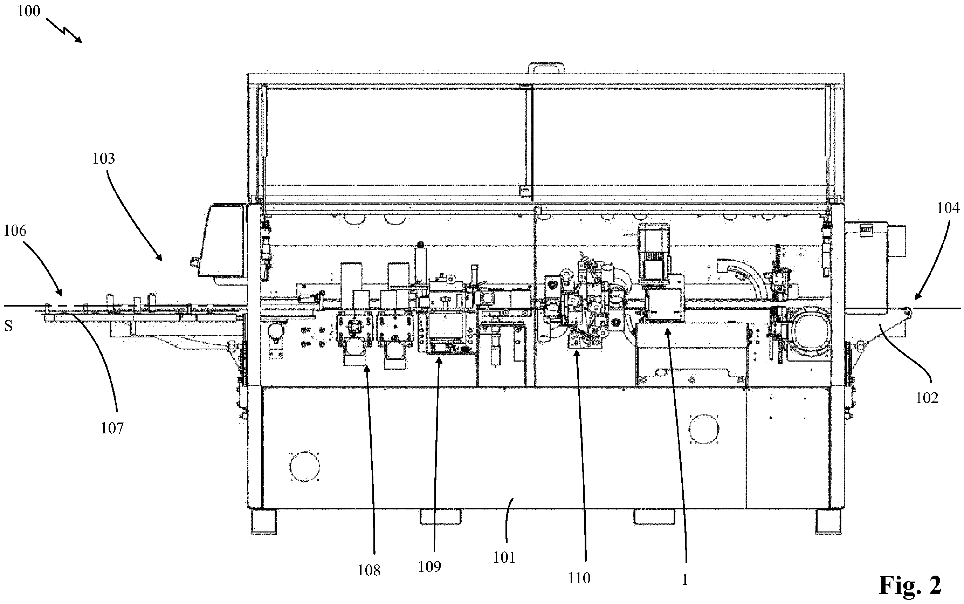

The edge-banding machine 100 is adapted to apply a coating edge B (e.g. made of PVC, ABS, melamine, wood, formica, aluminum, etc.) on one or more sides L of the panel P. In accordance with the embodiment illustrated in figures 1 and 2, the edge-banding machine 100 is in particular of mono lateral type, being adapted to apply a coating edge B to only one side of the panel P with each passage of the panel P through the edge-banding machine 100 itself.

Advantageously, the edge-banding machine 100 comprises a support frame 101 intended to be abutted against the ground and provided with a sliding lane 102 extended between an inlet port 103 and an outlet port 104, preferably according to a slide direction S that is substantially rectilinear and in particular horizontal.

The edge-banding machine 100 also comprises advancing means 105 adapted to move the panels P to advance along the sliding lane 102 from the inlet port 103 to the outlet port 104.

Preferably, the advancing means 105 comprise a tracked conveyor belt of per se known type, adapted to advance the panels P separately and in horizontal position, in succession one after the other from the inlet port 103 to the outlet port 104.

Advantageously, the edge-banding machine 100 also comprises a storage station 106 adapted to house a border strip to be applied to the sides L of the panels P, and such border strip will form the coating edge B of the panels P themselves. More in detail, such storage station 106 comprises a rotatable support 107 which carries the border strip (not illustrated) wound thereon and is actuatable to rotate in order to unwind the border strip along the sliding lane 102, in order to apply the border strip to the side L of the panel P.

The edge-banding machine 100 advantageously comprises a grinding/refacing unit 108, of per se known type, placed along the sliding lane 102 downstream of the inlet port 103 and provided with one or more cutters (not illustrated) adapted to operate on the side L of the panel P in order to eliminate the irregularities thereof.

The edge-banding machine 100 comprises according to the invention a gluing unit 109 mounted on the support frame 101 along the sliding lane 102 (in particular downstream of the grinding/refacing unit 108) and arranged in order to glue a border strip on one of the sides L of the panel P in order to form a coating edge B.

Advantageously, the gluing unit 109 comprises, in a per se conventional manner, a distribution device adapted to draw a glue (e.g. of hot-melt type) from a containment tub and to deposit a layer of such glue on the side L of the panel P. The gluing unit 109 is also provided with two or more rollers adapted to compress the border strip on the glue layer in order to glue the border strip to the side L of the panel P. The gluing unit 109 is also provided with a cutting tool adapted to cut the border strip at the rear edge of the side L of the panel P, in a manner such that the border strip portion attached to the side L of the panel P forms a coating edge B of the panel P itself.

The coating edge B glued to the corresponding side L of the panel P by means of the gluing unit 109 has greater length than the side L of the panel P and greater width than the thickness of the panel P itself, in a manner such that the coating edge B projects with respect to the end edges and to the flanks of the side L of the panel P.

Advantageously, the edge-banding machine 100 also comprises a trimming unit 110, of per se known type, arranged downstream of the gluing unit 109 and adapted to cut the portions of the coating edge B which project beyond the flanks of the side L of the panel P, in particular substantially flush with the main faces of the panel P itself.

The edge-banding machine 100 can be advantageously provided with further operative units of per se known type and not described in the present document.

Advantageously, the edge-banding machine 100 comprises a control unit, in particular provided with a PLC, adapted to control in an automated or semi-automated manner the operative units 108, 109, 110 of the edge-banding machine 100 itself.

The (abovementioned) milling device 1 of the edge-banding machine 100 is mounted on the support frame 101 along the sliding lane 102, preferably downstream of the gluing unit 109 and in particular downstream also of the trimming unit 110.

Such milling device 1 can be actuated in order to mill the portions of the coating edge B that project beyond the end edges of the corresponding side L of the panel P, defining two ends E of the coating edge B that are substantially aligned with the edges of the corresponding side L of the panel P.

Advantageously, the milling device 1 can be actuated in order to selectively execute a facing operation or a rounding operation.

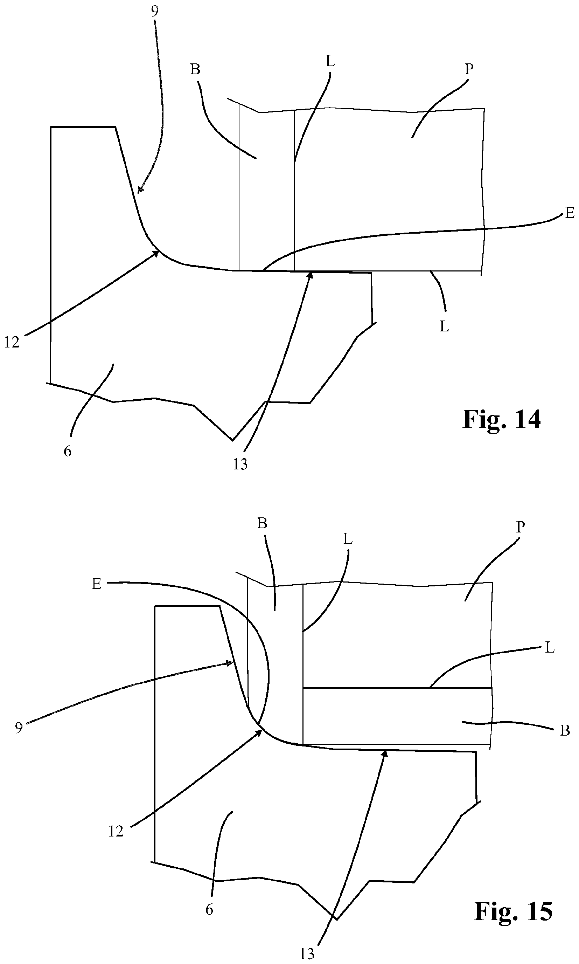

In the facing operation the milling device 1 is adapted to cut, in a rectilinear manner, the ends E of the coating edge B substantially flush with the end edges of the corresponding side L of the panel P, as illustrated in particular in the embodiment of figure 14.

In the rounding operation, the milling device 1 is adapted to round the ends E of the coating edge B of the panel P, in a manner such to continuously connect, without interruption, the external surface of such coating edge B with the external surface of the adjacent side L of the panel P, i.e. with the external surface of the coating edge B applied to such adjacent side L, as illustrated in particular in the embodiment of figure 15.

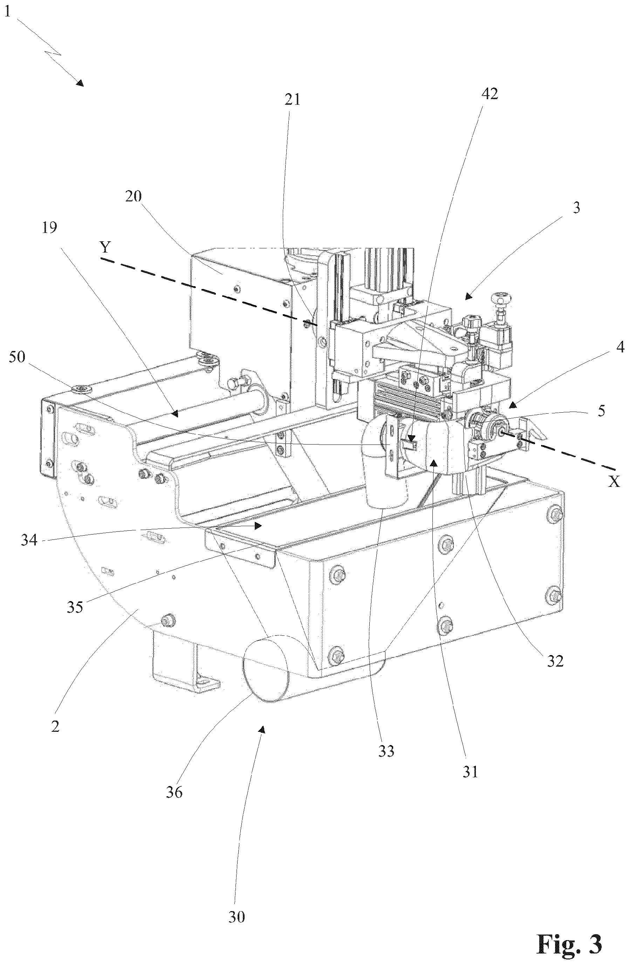

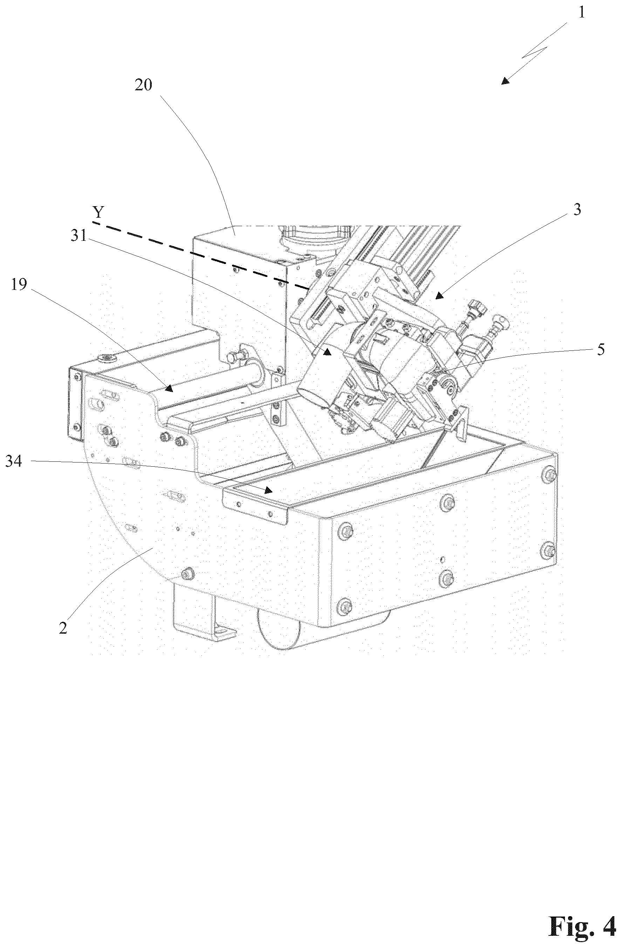

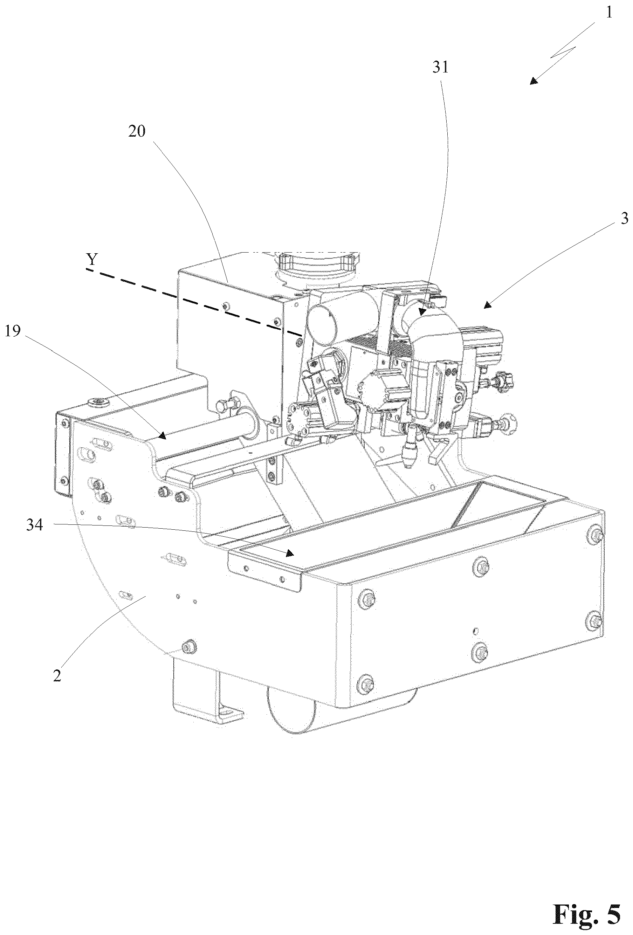

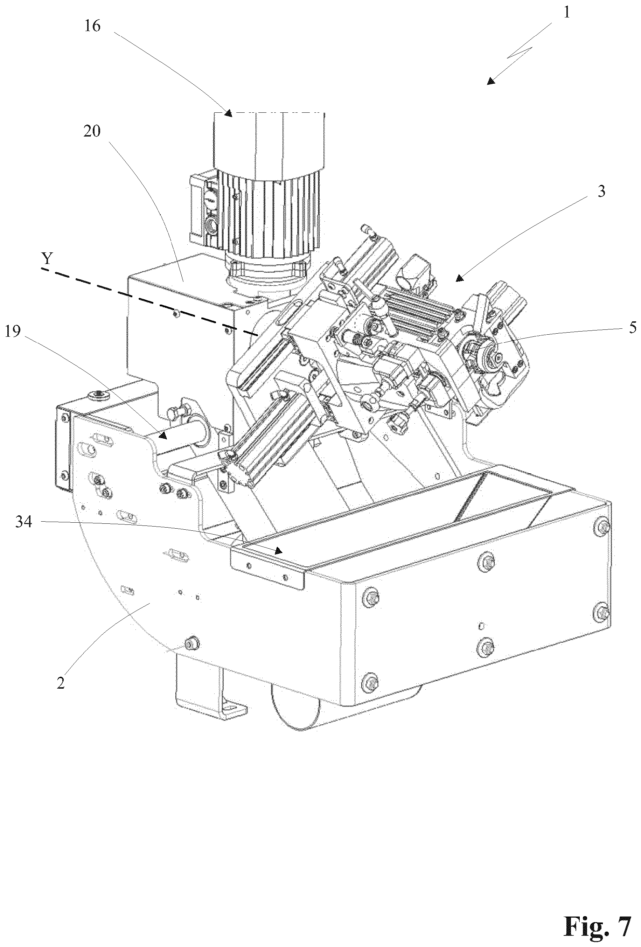

With reference to the embodiment illustrated in figures 3-9, the milling device 1 comprises a support structure 2 intended to be mounted on the edge-banding machine 100, and in particular intended to be fixed to the support frame 101 of the edge-banding machine 100 itself.

The milling device 1 also comprises a milling head 3 mounted on the support structure 2 and advantageously provided with an operating zone 4 in which it is susceptible of passing the coating edge B of the panel P which advances along the sliding lane 102.

The milling device 1 also comprises a milling tool 5 mounted on the milling head 3 and comprising a rotation body 6 provided with a rotation axis X, preferably orthogonal to the slide direction S of the panels P and in particular horizontal.

Advantageously, the rotation body 6 is peripherally provided with a cutting profile 9 extended around the rotation axis X, intended to operate at the operating zone 4 in order to mill the coating edge B of the panel P.

The milling device 1 also comprises actuation means 10 mechanically connected to the milling tool 5 and adapted to rotate the rotation body 6 of the latter around the rotation axis X in order to allow the cutting profile 9 of the rotation body 6 to mill the coating edge B of the panel P.

Preferably, the rotation body 6 of the milling tool 5 is peripherally provided with a plurality of teeth arranged around the rotation axis X, on which the aforesaid cutting profile 9 is made.

Advantageously, the actuation means 10 comprise a first motor, preferably electronic, mounted on the milling head 3 and provided with an outlet shaft to which the rotation body 6 of the milling tool 5 is connected in order to rotate the rotation body 6 around the rotation axis X, at a speed for example of 12000 revolutions/minute.

Suitably, the rotation body 6 of the milling tool 5 is made of a rigid material, preferably metallic, such as steel (e.g. super rapid steel), sintered metal, etc.

Advantageously, in accordance with a preferred embodiment of the invention illustrated in the figures 14 and 15, the cutting profile 9 of the rotation body 6 of the milling tool 5 is provided with a section having a rounded section 12 of curved shape, and a substantially rectilinear facing section 13. The aforesaid section of the cutting profile 9 is defined on a plane of radial section, parallel to the rotation axis X and in particular containing the rotation axis X itself.

Preferably, the milling device 1 comprises movement means 14 (for example comprising a linear actuator, in particular of pneumatic type) mechanically connected to the milling tool 5 and adapted to move such milling tool 5 along the rotation axis X between a retreated position (illustrated in the embodiment of figure 14) and a forward position (illustrated in the embodiment of figure 15).

When the milling tool 5 is in the retreated position, the facing section 13 of the cutting profile 9 of the rotation body 6 is arranged in the operating zone 4 in order to operate on the coating edge B of the panel P, in order to linearly cut the end E of such coating edge B, in a manner such to execute the aforesaid facing operation.

When the milling tool 5 is in the forward position, the rounded section 12 of the cutting profile 9 of the rotation body 6 is arranged in the operating zone 4 in order to operate on the coating edge B of the panel P in order to round the end E of the coating edge B itself, in a manner so as to execute the aforesaid rounding operation.

In this manner, the milling device 1 is capable of executing both facing operations and rounding operations.

In accordance with a different embodiment of the present invention, the milling device 1 is only adapted to execute rounding operations (in this case the cutting profile 9 of the rotation body 6 of the milling tool 5 being provided with only one curved rounded section), or, in accordance with a further different embodiment, the milling device 1 is adapted to only execute facing operations (in this case the cutting profile 9 of the rotation body 6 of the milling tool 5 being provided with only one rectilinear facing section).

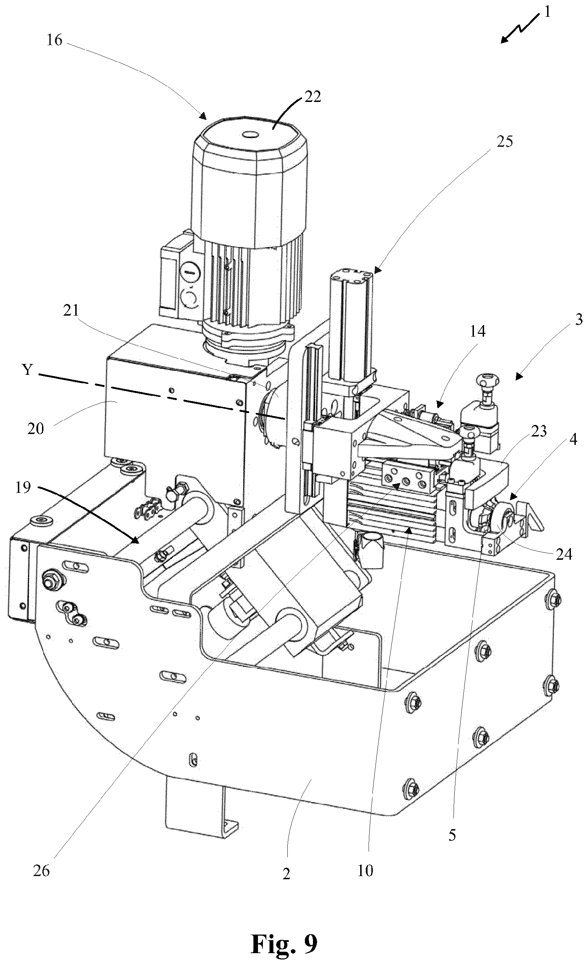

According to the present invention, with reference to the example of figures 3 and 9, the support structure 2 of the milling device 1 comprises a translation guide 19 orthogonal to the rotation axis X of the milling tool 5 and intended to be arranged parallel to the slide direction S of the sliding lane 102 along which the panels P to be bordered advance.

The milling device 1 also comprises a movable carriage 20 slidably mounted on the translation guide 19 and carrying the milling head 3 mounted thereon. Such movable carriage 20 is actuatable to slide along the translation guide 19 in order to allow the milling head 3 to follow the panels which advance on the sliding lane 102.

For such purpose, the milling device 1 advantageously comprises displacement means (not illustrated in the enclosed figures), which are mounted on the support structure 2 and are mechanically connected to the movable carriage 20 in order to actuate the latter to slide along the translation guide 19.

In particular, the aforesaid displacement means comprise a second motor, which is connected to the movable carriage 20 preferably through flexible transmission means, which are advantageously constituted by a chain wound as a loop on a drive wheel, a stretcher wheel and two transmission wheels.

The second motor is advantageously constituted by an asynchronous motor and is controlled by an inverter connected to the control unit of the edge-banding machine 100, having an electronic positioning system that allows controlling the rotation of the rotor of the second motor and thus finally which allows controlling the position of the movable carriage 20 (and therefore of the milling head 3) along the translation guide 19. Preferably, the movement of the panels P by the advancing means 105 of the edge-banding machine 100 is assisted by an encoder, also connected to the control unit and capable of producing a pulse signal capable of driving the inverter of the second motor so that the movable carriage 20 is moved perfectly synchronously with the panels P. Consequently the second motor drives the translation of the milling head 3 at the same speed as the panels P in order to follow the latter in their travel along the sliding lane 102 of the edge-banding machine 100.

According to the invention, the milling head 3 is rotatably mounted on the movable carriage 20, in particular by means of an overturning shaft 21, around an overturning axis Y that is orthogonal with respect to the translation guide 19 and parallel to the rotation axis X of the milling tool 5.

In addition, the milling device 1 comprises movement means 16 mechanically connected to the milling head 3 in order to drive the latter to rotate around the overturning axis Y for at least one rotation travel having at least one rest position.

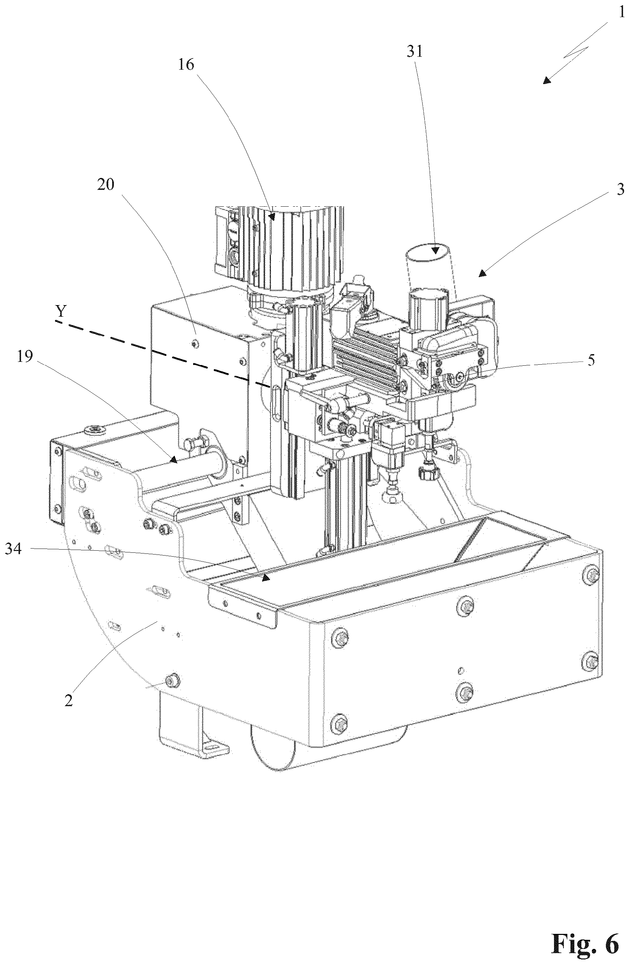

In particular, when the panel P (advancing along the sliding lane 102) reaches the milling device 1, the milling head 3 (starting from a first rest position illustrated in the embodiment of figure 3) is brought by the movable carriage 20 (which is actuated to slide along the translation guide 19) to follow the panel P at the front end edge of the side L of the panel P itself. Then, the milling head 3 is actuated by the movement means 16 to rotate around the overturning axis Y for a first rotation travel (substantially of 180 degrees) up to an overturned position (illustrated in the embodiment of figure 6) in order to operate on the coating edge B along the aforesaid front end edge.

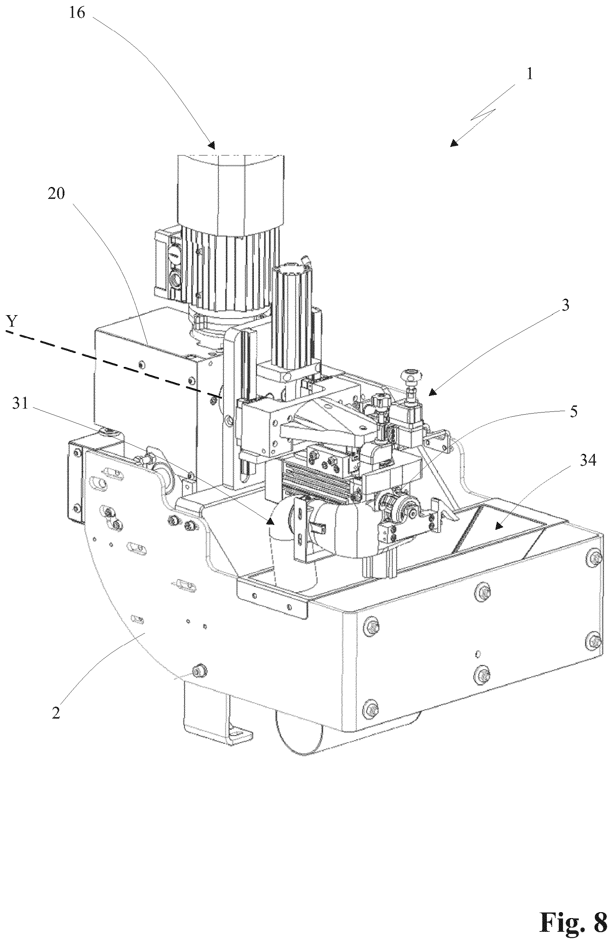

Subsequently, the movable carriage 20 stops its translation travel along the translation guide 19 and waits for the passage of the rear end edge of the side L of the panel P and, then, starts to follow the latter. At this point, the milling head 3 is actuated by the movement means 16 to rotate around the overturning axis Y for a second rotation travel (substantially of 180 degrees), in the same direction as the aforesaid first rotation travel, in order to operate on the coating edge B along the aforesaid rear end edge, by rotating from the overturned position up to a second rest position (illustrated in the embodiment of figure 8).

Then, the movable carriage 20 is stopped and is driven to return to the first rest position (illustrated in the embodiment of figure 3).

Preferably, the movement means 16 (adapted to drive the rotation of the milling head 3 around the overturning axis) comprise a third motor 22 integral with the movable carriage 20, mechanically connected to the milling head 3 in order to drive the latter to rotate around the overturning shaft 21, and advantageously electrically coupled with the second motor of the displacement means in order to synchronize, according to predetermined operative steps, the rotation of the milling head 3 around the overturning axis Y with its translation along the translation guide 19 above the movable carriage 20. In particular, the third motor 22 is constituted by a gear motor with worm screw controlled by means of an inverter connected to the control unit of the edge-banding machine 100 and provided with a pulse positioner for a correct angular positioning of the milling head 3.

Advantageously, so as to maintain the milling tool 5, during the cutting of the coating edges B of the panel P, constantly at a precise distance from the edges B themselves, the milling head 3 comprises a front coupler 23 and a vertical coupler 24, the latter in particular constituted by an idle disc free to rotate with axis parallel to the rotation axis X of the rotation body 6 of the milling tool 5.

Preferably, the milling head 3 comprises actuator means 25, 26 (in particular obtained with corresponding pneumatic actuators) adapted to keep the two couplers 23, 24 constantly abutted against the panel P and thus ensure the correct work position of the milling tool 5.

The milling device 1 comprises suction means 30 operatively associated with the milling head 3 and adapted to evacuate from the latter the chips produced by the rotation body 6 of the milling tool 5 when it operates against the coating edge B of the panel P.

In accordance with the idea underlying the present invention, the suction means 30 comprise a movable tank 31, which is mounted on the milling head 3 and is adapted to receive at its interior the chips produced by the milling tool 5 during the working of the coating edges B and, in particular, during the rotation travels of the milling head 3 around the overturning axis Y.

Advantageously, the movable tank 31 is fixed to the milling head 3 in a manner such to be moved integrally with the latter during the rotation travels around the overturning axis Y.

More in detail, the movable tank 31 is provided with an inlet mouth 32 arranged at the rotation body 6 of the milling tool 5 in order to make the chips generated by the rotation body 6 itself enter within the movable tank 31.

In particular, the rotation of the rotation body 6 generates a centrifugal pressure wave that pushes the chips away from the rotation body 6 itself towards the inlet mouth 32 of the movable tank 31, in a manner such to collect them within the latter.

The movable tank 31 is also provided with an outlet mouth 33 in order to evacuate the chips from the movable tank 31 itself when the milling head 3 is in the rest position.

In addition, the suction means 30 comprise a collection tub 34, which is mounted on the support structure 2 of the milling device 1 and is intended to receive the chips which are evacuated from the movable tank 31 when the milling head 3 is in the rest position. The collection tub 34 is mechanically separated from the movable tank 31, in a manner such that the movement of the movable tank 31 (during the rotation of the milling head 3 and the sliding of the movable carriage 20) is not at all constrained to the collection tub 34.

In particular, the collection tub 34 is fixed to the support structure 2 and is preferably positioned below the milling head 3 (and below the movable tank 31).

The collection tub 34 is provided with an inlet opening 35, through which it is adapted to receive the chips coming from the outlet mouth 33 of the movable tank 31, and with an outlet opening 36 intended to be connected to a suction plant adapted to generate reduced pressure in the collection tub 34 in order to remove the chips from the collection tub 34 so as in particular to suitably dispose of them.

For example, the suction plant comprises a vacuum pump connected by means of a suction piping to the outlet opening 36 of the collection tub 34 so as, in particular, to convey the chips present in the collection tub 34 into suitable rooms or containers for an appropriate disposal thereof.

In particular, the inlet opening 35 of the collection tub 34 is arranged in a manner such that, when the milling head 3 is in the rest position, it is directed towards the outlet mouth 33 of the movable tank 31 such that the chips that exit from the latter enter into the collection tub 34 through the inlet opening 35.

Preferably, the inlet opening 35 of the collection tub 34 is arranged below the milling head 3 and directed upward and, in particular, it is positioned below the outlet mouth 33 of the movable tank 31, which advantageously, when the milling head 3 is in the rest position, is directed downward.

Advantageously, with reference to the embodiment illustrated in the enclosed figures, the collection tub 34 has a shape tapered from the inlet opening 35 to the outlet opening 36.

According to the invention, the suction means 30 comprise an expulsion valve 37 mounted on the movable tank 31 and actuatable to be moved between a closed configuration, in which it prevents the exit of the chips through the outlet mouth 33 of the movable tank 31, and an open configuration, in which it allows the chips collected in the movable tank 31 to be expelled by means of the outlet mouth 33 of the latter and consequently conveyed into the collection tub 34, when the milling head is in the rest position.

More in detail, when the milling head 3 completes the rotation travels in order to operate on the coating edge B, the expulsion valve 37 is in the closed configuration in order to prevent the chips (which enter into the movable tank 31 through the inlet mouth 32 of the latter) from exiting from the movable tank 31 through the outlet mouth 33. In particular, during, the rotation of the milling head 3, the centrifugal pressure wave generated by the rotation body 6 generates an air flow that enters into the movable tank 31 through the inlet mouth 32 of the latter, preventing the chips from being able to exit the movable tank 31 through the inlet mouth 32 itself.

When the milling head 3 is arranged in the rest position, the expulsion valve 37 is brought into the open configuration in a manner such to enable the exit of the chips from the outlet mouth 33 of the movable tank 31. In particular, with reference to the above-illustrated embodiment, the expulsion valve 37 can be brought into the open configuration when the milling head 3 is in the first rest position (illustrated in the embodiment of figure 3), and/or in the second rest position (illustrated in the embodiment of figure 8), and/or in a rest position during the translation of the movable carriage 20 from the second rest position to the first rest position.

Advantageously, the movable tank 31 is extended with elongated shape from the inlet mouth 32 to the outlet mouth 33 and is internally provided with an internal channel 38 in which the chips are collected that enter from the inlet mouth 32.

Preferably, the movable tank 31 comprises an inlet section 39, which is extended from the inlet mouth 32 to a first bend (preferably elbow), and an outlet section 40, which is extended from the said outlet mouth 33 to a second bend (preferably elbow) and is tilted with respect to the inlet section 39. The outlet section 40 is connected to the inlet section 39 by means of a connection section 41 connected to the latter by means of the aforesaid folds.

In particular, the connection section 41 is extended parallel to the rotation axis X of the rotation body 6 between the inlet section 39 (orthogonal to the connection section 41) and the outlet section 40 (orthogonal to the connection section 41 and to the inlet section 39).

Advantageously, the inlet mouth 32 of the movable tank 31 is extended around the rotation body 6 of the milling tool 5 for an inlet angle of about 90 degrees having vertex in the rotation axis X of the rotation body 6 itself, and in particular is arranged downstream of the rotation body 6 with respect to the rotation direction of the latter, in a manner such to receive the chips generated by the working of the coating edge B. Preferably, inlet mouth 32 of the movable tank 31 is extended at least on an opposite side (opposite with respect to the rotation axis X) to the operating zone 4 of the milling head 3, and in particular on such opposite side and on an adjacent side across from the rotation body 6.

Preferably, the movable tank 31 is made of plastic material, or of light metal material such as aluminum or sheet metal.

Advantageously, the movable tank 31 is fixed to the milling head 3 by means of connection bracket 50, preferably L-shaped, having a first arm fixed to the movable tank 31 (in particular to the connection section 41 of the latter) by means of first screws, and a second arm fixed to the milling head 3 by means of second screws.

In addition, the movable tank 31 is provided, at the inlet mouth 32, with a connection flange 51 fixed to the milling head 3 by means of third screws.

Advantageously, the expulsion valve 37 is arranged within the movable tank 31, at the outlet mouth 33 of the latter.

In particular, the expulsion valve 37 is arranged in the internal channel 38 of the movable tank 31 in proximity to the outlet mouth 33, and is arranged in a manner such that, when it is in the closed configuration, it blocks the transverse section of the internal channel 38, separating the inlet mouth 32 from the outlet mouth 33 of the movable tank 31. In this manner, when the expulsion valve 37 is in the closed configuration, the chips which enter into the movable tank 31 through the inlet mouth 32 are stopped by the expulsion valve 37 which consequently prevents the chips from reaching the outlet mouth 33.

In accordance with a different non-illustrated embodiment, the expulsion valve 37 is arranged outside the internal channel 38 of the movable tank 31, on the outlet mouth 33 of the latter in order to open and close the opening of the outlet mouth 33 itself. Advantageously, the suction means 30 comprise means 42 for injecting compressed air connected to the movable tank 31 and arranged for injecting, when the milling head 3 is in the rest position, a pressurized air flow within the internal channel 38 of the movable tank 31 towards the outlet mouth 33 of the latter so as to expel the chips outside the movable tank 31 through the outlet mouth 33 itself.

Preferably, in accordance with the particular embodiment described hereinbelow, the pressurized air flow generated by the compressed air injection means 42 also causes the opening of the expulsion valve 37.

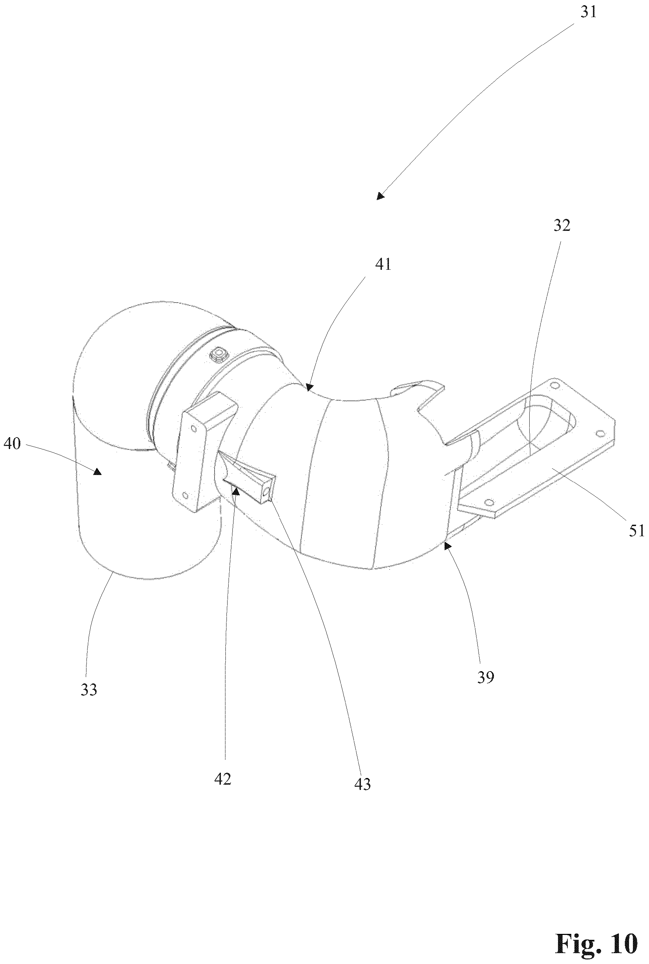

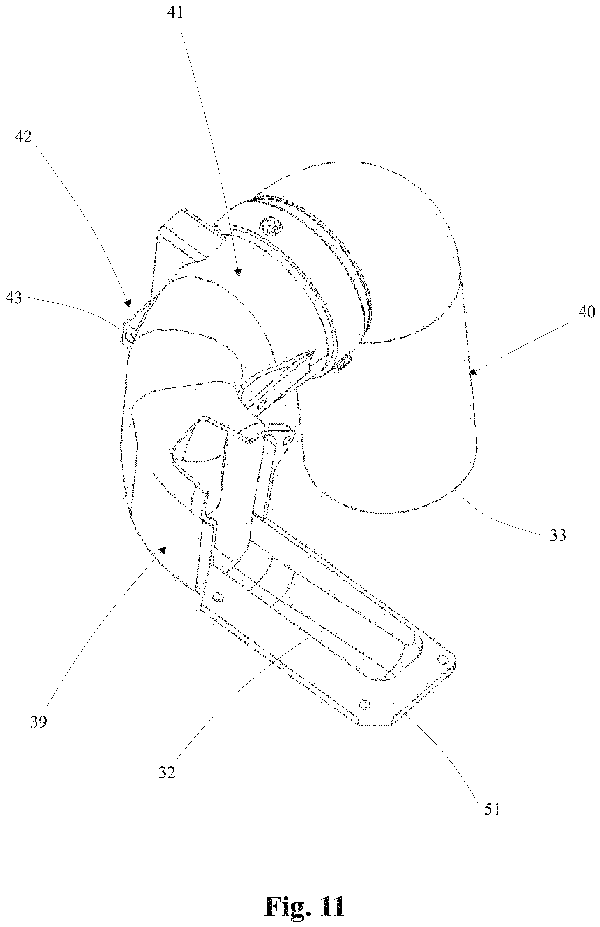

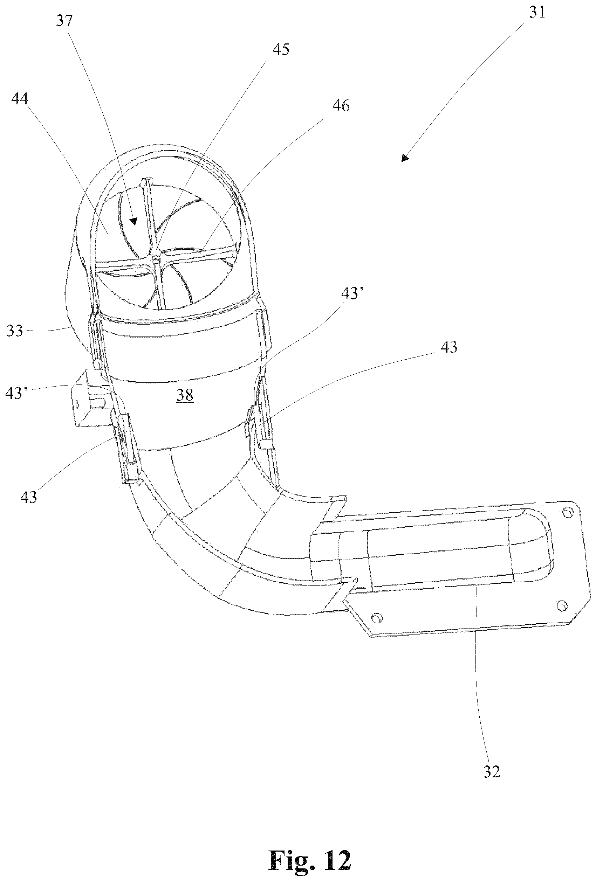

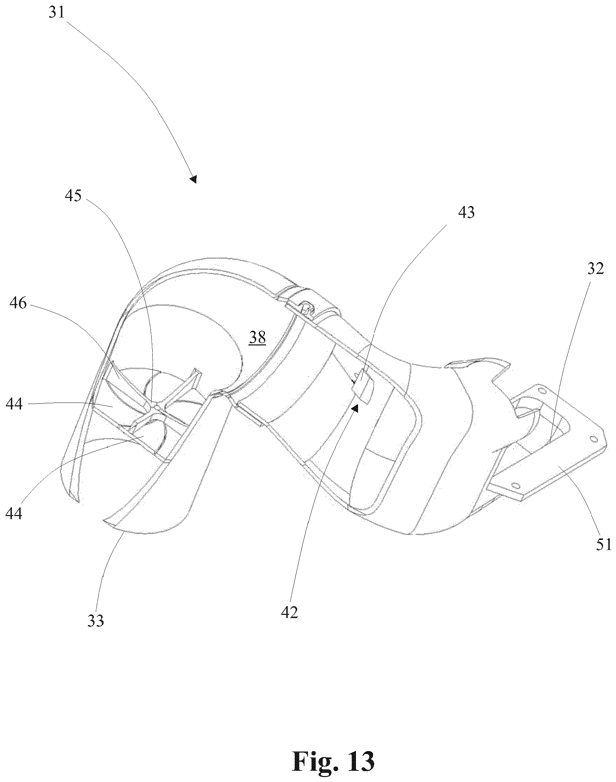

With reference to the embodiment illustrated in figures 10-13, the compressed air injection means 42 comprise at least one nozzle 43 mounted on the movable tank 31, communicating with the interior of the latter and connected to a compressed air source by means of suitable connection pipes (not illustrated in the enclosed figures).

In particular, two nozzles 43 are provided, arranged in diametrically opposite position with respect to the transverse section of the movable tank 31.

Advantageously, the nozzle 43 is provided with an ejection opening 43' which opens on the internal channel 38 of the movable tank 31, oriented in the direction that leads to the outlet mouth 33 of the latter.

Preferably, the nozzle 43 is arranged (along the extension of the movable tank 31 from the inlet mouth 32 to the outlet mouth 33) between the inlet mouth 32 and the expulsion valve 37, in particular in the connection section 41 of the movable tank 31.

Preferably, the nozzle 43 is made in the wall of the movable tank 31.

Advantageously, the expulsion valve 37 is provided with at least one flexible blocking portion 44 that is arranged for being brought into the open configuration by the pressurized air flow generated by the compressed air injection means 42, and for elastically returning into the closed configuration in the absence of such pressurized air flow.

In particular, the blocking portion 44 of the expulsion valve 37 is adapted to close the transverse section of the internal channel 38 of the movable tank 31 when the expulsion valve 37 is in the closed configuration. Such blocking portion 44 is susceptible of being elastically deformed under the action of the pressurized air flow generated by the compressed air injection means 42, in a manner such to open an opening in the transverse section of the internal channel 38 that allows the passage of the chips towards the outlet mouth 33 of the movable tank 31.

Preferably, the expulsion valve 37 comprises multiple plate-like blocking portions 44 which, when subjected to the pressurized air flow, are adapted to elastically bend, defining slits between them, through which the chips thrust by the same pressurized air flow are susceptible of passing.

Preferably, the expulsion valve 37 comprises a fixed portion 45, which is rigidly constrained to the movable tank 31 (and in particular to the internal surface of the latter) and carries the movable blocking portions 44 mounted thereon.

In particular, the fixed portion 45 comprises multiple arms 46 extended between a common central end and corresponding peripheral ends fixed to the internal surface of the movable tank 31.

The arms 46 of the fixed portion 45 delimit openings between them that are covered by the blocking portions 44.

Preferably, the blocking portions 44 of the expulsion valve 37 are configured for being moved under the action of the pressure exerted thereon by the pressurized air flow generated by the compressed air injection means 42 (so as to bring the valve into the open configuration), while they possess a resistance to deformation such to not be bent by the centrifugal pressure wave generated by the rotation body 6 which enters into the movable tank 31 through the inlet mouth 32 of the latter.

In this manner, the expulsion valve 37 remains in the closed configuration during the rotation of the milling head 3 in order to allow maintaining inside the movable tank 31 the chips that have entered from the inlet mouth 32 of the latter, and is brought into the open configuration only when the compressed air injection means 42 are actuated for generating the pressurized air flow, when the milling head 3 is brought into the rest position.

Preferably, the pressure of the pressurized air flow generated by the compressed air injection means 42 is greater than the pressure of the pressure wave (generated by the rotation body 6) that enters into the movable tank 31, and is for example equal to about 6 bar.

In accordance with a different non-illustrated embodiment, the expulsion valve 37 is configured in order to be actuated independently of the compressed air injection means 42, being configured for example as a solenoid valve or as a pneumatic valve.

Also forming the object of the present invention is a method for operating an edge-banding machine of the above-described type.

Hereinbelow, for the sake of description simplicity, reference will be made to the same nomenclature introduced up to now, even if it must be intended that the present method can also be obtained with machines not provided with all of the above-considered characteristics.

In operation, such method provides for passing the panel P through the edge-banding machine 100 from the inlet port 103 to the outlet port 104 of the latter along the sliding lane 102. With each passage of the panel P, the operative units 108, 109, 110 of the edge-banding machine 100 apply a coating edge B to one of the sides L of the panel P. More in detail, in each passage, an operator must introduce the panel P into the edge-banding machine 100 at the inlet port 103 of the latter, in a manner such that the advancing means 105 of the edge-banding machine 100 advance the panel P along the sliding lane 102 of the edge-banding machine 100 itself.

The method advantageously comprises a step of grinding/refacing the side L of the panel P to be bordered, by means of the aforesaid grinding/refacing unit 108 of the edge-banding machine, in particular so as to eliminate irregularities present on the side L.

Then, according to the invention, a step is provided for gluing a portion of the border strip on the side L of the panel P, in particular obtained by means of the aforesaid gluing unit 109, in a manner such to attach a coating edge B to the side L of the panel P.

In particular, the coating edge B applied in such gluing step projects beyond the end edges and beyond the flanks of the side L of the panel P.

Advantageously, the method comprises, in particular after the gluing step, a trimming step, in particular obtained by means of the trimming unit 110 of the edge-banding machine 100, in order to remove portions of the coating edge B projecting from the flanks of the side L of the panel P.

The method advantageously comprises a facing step in order to linearly cut the coating edge B at the end edges of the panel P, and/or a step for rounding the coating edge B in order to carry out an angular working of connection and rounding at the end edges of the panel P.

Such facing and rounding steps are both executed by the milling device 1 by means of the operating method, object of the present invention.

The method, object of the present invention, in particular in the aforesaid facing and/or rounding step, provides for actuating the rotation body 6 of the milling tool 5 to rotate around the rotation axis X, in particular by means of the actuation means 10 of the milling device 1.

It is also provided to actuate the movable carriage 20 (by means of the displacement means) to slide along the translation guide in order to follow each panel P which advances along the sliding lane 102 of the edge-banding machine 100, up to bringing the milling head 3 to at least one end edge of the side L of the panel P.

When the milling head 3 has reached the end edge of the side L of the panel P, the milling head 3 is actuated (by the movement means 16) to rotate around the overturning axis Y in order to bring the rotation body 6 of the milling tool 5 to operate on the coating edge B at the aforesaid end edge, generating chips from the cutting of the coating edge B itself.

In particular, the movable carriage 20 is actuated to bring the milling head 3 to the front end edge of the side L of the panel P, at which edge the milling head 3 is actuated to rotate according to the aforesaid first rotation travel, and to bring the milling head 3 to the rear end edge of the side L of the panel P, at which edge the milling head 3 is actuated to rotate according to the aforesaid second rotation travel, in accordance with that described above.

During the working of the coating edge B, and in particular during the rotation of the milling head 3 around the overturning axis Y, the rotation body 6, by rotating, generates a centrifugal pressure wave adapted to push the chips into the movable tank 31 through the inlet mouth 32 of the latter.

During the operative travel of the milling head 3 around the overturning axis Y, the expulsion valve 37 is, according to the invention in the closed configuration, in order to prevent the chips from exiting from the movable tank 31 through the outlet mouth 33 of the latter.

The pressure wave generated by the rotation body 6 of the milling tool 5 at least partially enters into the internal channel 38 of the movable tank 31 through the inlet mouth 32 of the latter, in a manner such to push the chips towards the interior of the movable tank 31 and hence preventing them from exiting through the inlet mouth 32. Preferably, the pressure generated by the pressure wave in the internal channel 38 of the movable tank 31 is not such to move the blocking portions 44 of the expulsion valve 37, in a manner such that the latter remains in the closed configuration.

Following the rotation travel of the milling head 3, the latter is arranged in the rest position (e.g. as in figure 3 or 8), in which the outlet mouth 33 of the movable tank 31 is directed towards the inlet opening 35 of the collection tub 34 and the expulsion valve 37 is actuated to be moved into the open configuration in order to unload the chips from the movable tank 31 into the collection tub 34.

In particular, the expulsion valve 37 is actuatable to be moved into the open configuration when the milling head 3 is in the first rest position (illustrated in the embodiment of figure 3), and/or into the second rest position (illustrated in the embodiment of figure 8), and/or during the translation of the movable carriage 20 (and hence of the milling head 3) from the first rest position to the second rest position.

Advantageously, when the milling head 3 is in the rest position, the compressed air injection means 42 introduce (in particular by means of the nozzles 43) a pressurized air flow into the movable tank 31, which is directed towards the outlet mouth 33 and preferably towards the expulsion valve 37.

Advantageously, such pressurized air flow moves the blocking portion 44 of the expulsion valve 37, bringing the latter into the open configuration in order to allow the passage of the chips outside the movable tank 31 through the outlet mouth 33 of the latter.

In particular, the chips exit from the outlet mouth 33 of the movable tank 31 pushed by the pressurized air flow, which facilitates the falling thereof within the collection tub 34. The chips are then extracted from the collection tub 34 through the outlet opening 36 of the latter following the reduced pressure generated by the suction plant, so as to convey the chips into suitable rooms or containers for their disposal.

The invention thus conceived therefore attains the pre-established objects.

In particular, the arrangement of the movable tank 31 separated from the collection tub 34, according to the invention, allows the movable tank 31 to follow the rotation of the milling head 3 without mechanical constraints due to connection ducts and occupying reduced size within the edge-banding machine 100.

In addition, the movable tank 31 mounted on the milling head 3 does not determine any significant increase of weight of the milling head 3, which is capable of operating in an entirely efficient manner without any reduction of the working quality, generated by increases of inertia in the movement of the milling head 3.

## Claims

1. Edge-banding machine (100), which comprises:
- a support frame (101) provided with a sliding lane (102) extended between an inlet port (103) and an outlet port (104):
- advancing means (105) adapted to advance panels (P) to be worked along the sliding lane (102) of said support frame (101) from said inlet port (103) to said outlet port (104);
- a gluing unit (109) mounted on said support frame (101) along said sliding lane (102) and arranged for gluing a border strip on one of the sides (L) of said panel (P) in order to form a coating edge (B);
- a milling device (1) mounted on said support frame (101) along said sliding lane (102);
wherein said milling device (1) comprises:
- a support structure (2), which comprises a translation guide (19) fixed to said support frame (101) and arranged substantially parallel to said sliding lane (102);
- a movable carriage (20) slidably mounted on said translation guide (19) and actuatable to slide along said translation guide (19);
- a milling head (3) rotatably mounted on said movable carriage (20) around an overturning axis (Y) orthogonal to said translation guide (19);
- movement means (16) mechanically connected to said milling head (3) in order to drive said milling head (3) to rotate around said overturning axis (Y) for at least one rotation travel up to at least one rest position;
- a milling tool (5), which is rotatably mounted on said milling head (3) and comprises a rotation body (6) provided with a rotation axis (X) and intended to operate on the coating edge (B) of said panel (P);
- actuation means (10) mechanically connected to said milling tool (5) and adapted to rotate said rotation body (6) around said rotation axis (X) in order to mill the coating edge (B) of said panel (P) with consequent production of chips;
- suction means (30) operatively associated with said milling head (3) in order to evacuate, from said milling head (3), the chips produced by the rotation body (6) of said milling tool (5);
said edge-banding machine (100) being **characterized in that** said suction means (30) comprise:
- a movable tank (31), which is mounted on said milling head (3) and is provided with an inlet mouth (32), arranged at the rotation body (6) of said milling tool (5) in order to make the chips generated by said rotation body (6) enter into said movable tank (31), and with an outlet mouth (33) in order to evacuate said chips from said movable tank (31) when said milling head (3) is in said rest position;
- a collection tub (34), which is mounted on said support structure (2), is mechanically separate from said movable tank (31) and is provided with an inlet opening (35), towards which the outlet mouth (33) of said movable tank (31) is directed when said milling head (3) is in said rest position, and with an outlet opening (36) intended to be connected to a suction plant adapted to create reduced pressure in said collection tub (34);
- an expulsion valve (37) mounted on said movable tank (31) and actuatable to be moved between a closed configuration, in which said expulsion valve (37) prevents the exit of said chips from said outlet mouth (33), and an open configuration, when said milling head (3) is in said rest position, in order to allow the chips collected in said movable tank (31) to be expelled by means of said outlet mouth (33) and conveyed into said collection tub (34).

2. Edge-banding machine (100) according to claim 1, **characterized in that** said suction means (30) comprise means (42) for injecting compressed air connected to said movable tank (31) and arranged for injecting, when said milling head (3) is in said rest position, into said movable tank (31) a pressurized air flow directed towards said outlet mouth (33).

3. Edge-banding machine (100) according to claim 2, **characterized in that** said compressed air injection means (42) comprise at least one nozzle (43) mounted on said movable tank (31), communicating with the interior of said movable tank (31) and connected to a compressed air source.

4. Edge-banding machine (100) according to claim 2 or 3, **characterized in that** said expulsion valve (37) is provided with at least one blocking portion (44) arranged for being brought into said open configuration by said pressurized air flow generated by said compressed air injection means (42), and for elastically returning into said closed configuration in the absence of said pressurized air flow.

5. Edge-banding machine (100) according to claim 4, **characterized in that** said at least one blocking portion (44) of said expulsion valve (37) is shaped as a flexible blade, which is configured in a manner such that, when said flexible blade is subjected to the pressurized air flow generated by said compressed air injection means (42), it is adapted to elastically bend, bringing said expulsion valve (37) into said open configuration.

6. Edge-banding machine (100) according to any one of the preceding claims, **characterized in that** said expulsion valve (37) is placed within said movable tank (31) at said outlet mouth (33).

7. Edge-banding machine (100) according to any one of the preceding claims, **characterized in that** the inlet mouth (32) of said movable tank (31) is extended around the rotation body (6) of said milling tool (5) for an inlet angle of at least 90 degrees having vertex in said rotation axis (X).

8. Edge-banding machine (100) according to any one of the preceding claims, **characterized in that** said milling head (3) is provided with an operating zone (4) in which the coating edge (B) of said panel (P) is susceptible of passing and at which the rotation body (6) of said milling tool (5) is susceptible of operating in order to mill said coating edge (B);
wherein the inlet mouth (32) of said movable tank (31) is extended at least on one side of said rotation body (6) opposite said operating zone (4) with respect to said rotation axis (X).

9. Method for operating an edge-banding machine (100) according to any one of the preceding claims, which method provides for:
- advancing said panels (P) along said sliding lane (102) from said inlet port (103) to said outlet port (104);
- gluing a portion of a border strip on a side (L) of said panel (P) in a manner such to attach a coating edge (B) to the side (L) of said panel (P);
- actuating the rotation body (6) of said milling tool (5) to rotate around said rotation axis (X);
- actuating said movable carriage (20) to be moved along said translation guide (19) in order to follow said panel (P) which advances along said sliding lane (102) up to bringing said milling head (3) to at least one end edge of the side (L) of said panel (P);
- when said milling head (3) is at the end edge of the side (L) of said panel (P), actuating said milling head (3) to rotate around said overturning axis (Y) in order to bring the rotation body (6) of said milling tool (5) to operate on said coating edge (B), generating chips; wherein said rotation body (6), by rotating, generates a centrifugal pressure wave adapted to push said chips into said movable tank (31) through said inlet mouth (32);
- arranging said milling head (3) in at least one rest position, in which the outlet mouth (33) of said movable tank (31) is directed towards the inlet opening (35) of said collection tub (34) and said expulsion valve (37) is actuated to be moved into said open configuration in order to unload said chips from said movable tank (31) into said collection tub (34).

10. Operating method according to claim 9 for operating an edge-banding machine (100) according to claim 4 or 5, **characterized in that**, when said milling head (3) is in said rest position, said compressed air injection means (42) are actuated to generate, within said movable tank (31), a pressurized air flow directed towards said outlet mouth (33), and such pressurized air flow moves the blocking portion (44) of said expulsion valve (37) into said open configuration in order to allow the exit of said chips outside said movable tank (31) through said outlet mouth (33).

## Patentansprüche

1. Kantenanleimmaschine (100), die Folgendes umfasst:
- einen Tragrahmen (101) mit einer zwischen einem Eingangskanal (103) und einem Ausgangskanal (104) verlaufenden Gleitbahn (102);
- Vorschubelemente (105), die geeignet sind, zu bearbeitende Platten (P) entlang der Gleitbahn (102) des genannten Tragrahmens (101) von dem genannten Eingangskanal (103) zu dem genannten Ausgangskanal (104) zu befördern;
- ein Verleimaggregat (109), das entlang der genannten Gleitbahn (102) auf dem genannten Tragrahmen (101) montiert und dazu eingerichtet ist, einen Randstreifen an einer der Seiten (L) der genannten Platte (P) anzuleimen, um eine Beschichtungskante (B) zu bilden;
- eine Fräsvorrichtung (1), die entlang der genannten Gleitbahn (102) an dem genannten Tragrahmen (101) montiert ist;
wobei die genannte Fräsvorrichtung (1) Folgendes umfasst:
- eine Tragstruktur (2), die eine an dem genannten Tragrahmen (101) befestigte und im Wesentlichen parallel zu der genannten Gleitbahn (102) angeordnete Übersetzungsbahn (19) umfasst;
- einen beweglichen Schlitten (20), der verschiebbar an der genannten Übersetzungsbahn (19) montiert ist und angesteuert werden kann, um entlang der genannten Übersetzungsbahn (19) zu gleiten;
- einen Fräskopf (3), der um eine zu der genannten Übersetzungsbahn (19) orthogonale Kippachse (Y) drehbar auf dem genannten beweglichen Schlitten (20) montiert ist;
- Bewegungselemente (16), die mechanisch mit dem genannten Fräskopf (3) verbunden sind, um den genannten Fräskopf (3) um die genannte Kippachse (Y) mindestens eine Umdrehung bis zu mindestens einer Ruheposition in Drehung zu versetzen;
- ein Fräswerkzeug (5), das drehbar an dem genannten Fräskopf (3) montiert ist und einen mit einer Drehachse (X) versehenen Drehkörper (6), umfasst, der dazu bestimmt ist, auf der Beschichtungskante (B) der genannten Platte (P) eingesetzt zu werden;
- Steuerelemente (10), die mechanisch mit dem genannten Fräswerkzeug (5) verbunden und geeignet sind, den genannten Drehkörper (6) um die genannte Drehachse (X) zu drehen, um die Beschichtungskante (B) der genannten Platte (P) mit sich daraus ergebender Spanabhebung zu fräsen;
- Absaugelemente (30), die operativ mit dem genannten Fräskopf (3) verbunden sind, um die von dem Drehkörper (6) des genannten Fräswerkzeugs (5) abgehobenen Späne von dem genannten Fräskopf (3) zu entfernen;
wobei die genannte Kantenanleimmaschine (100) **dadurch gekennzeichnet ist, dass** die genannten Absaugelemente (30) Folgendes umfassen:
- einen beweglichen Behälter (31), der an dem genannten Fräskopf (3) montiert und mit einer an dem Drehkörper (6) des genannten Fräswerkzeugs (5) angeordneten Eingangsmündung (32) ausgestattet ist, um die von dem genannten Drehkörper (6) erzeugten Späne in den genannten beweglichen Behälter (31) eintreten zu lassen, und mit einer Ausgangsmündung (33), um die genannten Späne aus dem genannten beweglichen Behälter (31) zu entleeren, wenn der genannte Fräskopf (3) sich in der genannten Ruheposition befindet;
- eine Auffangwanne (34), die an der genannten Trägerstruktur (2) montiert, mechanisch von dem genannten beweglichen Behälter (31) getrennt und mit einer Eingangsöffnung (35), zu der die Ausgangsmündung (33) des genannten beweglichen Tanks (31) gerichtet ist, wenn der genannte Fräskopf (3) sich in der genannten Ruheposition befindet, und mit einer Ausgangsöffnung (36), die dazu bestimmt ist, an eine Ansauganlage angeschlossen zu werden, die geeignet ist, in der genannten Auffangwanne (34) reduzierten Druck zu erzeugen, ausgestattet ist;
- ein Ausstoßventil (37), das auf dem genannten beweglichen Behälter (31) montiert ist und angesteuert werden kann, um sich zwischen einer geschlossenen Konfiguration, in der das genannte Ausstoßventil (37) das Austreten der genannten Späne aus der genannten Ausgangsmündung (33) verhindert, und einer geöffneten Konfiguration, in der sich der genannte Fräskopf (3) sich in der genannten Ruheposition befindet, bewegt zu werden, um es den in dem genannten beweglichen Behälter (31) gesammelten Spänen zu gestatten, über die genannte Ausgangsmündung (33) ausgestoßen und in die genannte Auffangwanne (34) befördert zu werden.

2. Kantenanleimmaschine (100) nach Anspruch 1, **dadurch gekennzeichnet, dass** die genannten Absaugelemente (30) an den genannten beweglichen Behälter (31) angeschlossene Elemente (42) zum Einspritzen von Druckluft umfassen, die zum Einspritzen eines zu der genannten Ausgangsmündung (33) gerichteten Druckluftstroms in den genannten beweglichen Behälter (31) eingerichtet sind, wenn der genannte Fräskopf (3) sich in der genannten Ruheposition befindet.

3. Kantenanleimmaschine (100) nach Anspruch 2, **dadurch gekennzeichnet, dass** die genannten Drucklufteinspritzungselemente (42) mindestens eine an dem genannten beweglichen Behälter (31) montierte und an eine Druckluftquelle angeschlossene Düse (43) umfassen.

4. Kantenanleimmaschine (100) nach Anspruch 2 oder 3, **dadurch gekennzeichnet, dass** das genannte Ausstoßventil (37) mit mindestens einem Sperrabschnitt (44) ausgestattet ist, der dazu eingerichtet ist, von dem von den genannten Drucklufteinspritzungselementen (42) erzeugten Druckluftstrom in die genannte geöffnete Konfiguration gebracht zu werden und bei Abwesenheit des genannten Druckluftstroms federnd in die genannte geschlossene Konfiguration zurückzukehren.

5. Kantenanleimmaschine (100) nach Anspruch 4, **dadurch gekennzeichnet, dass** der genannte mindestens eine Sperrabschnitt (44) des genannten Ausstoßventils (37) als eine biegsame Lamelle geformt ist, die so ausgelegt ist, dass, wenn die genannte biegsame Lamelle dem von dem genannten Drucklufteinspritzungselement (42) erzeugten Druckluftstrom ausgesetzt ist, diese geeignet ist, sich elastisch zu biegen und so das genannte Ausstoßventil (37) in die genannte geöffnete Konfiguration zu bringen.

6. Kantenanleimmaschine (100) nach einem beliebigen der vorangegangenen Ansprüche, **dadurch gekennzeichnet, dass** das genannte Ausstoßventil (37) in dem genannten beweglichen Behälter (31) an der genannten Ausgangsmündung (33) positioniert ist.

7. Kantenanleimmaschine 100) nach einem beliebigen der vorangegangenen Ansprüche, **dadurch gekennzeichnet, dass** die genannte Eingangsmündung (32) des genannten beweglichen Behälters (31) um den Drehkörper (6) des genannten Fräswerkzeugs (5) herum in einem Eingangswinkel von mindestens 90 Grad verläuft, der einen Scheitelpunkt in der genannten Drehachse (X) aufweist.

8. Kantenanleimmaschine (100) nach einem oder mehreren der vorangegangenen Ansprüche, **dadurch gekennzeichnet, dass** der genannte Fräskopf (3) mit einem Arbeitsbereich (4) ausgestattet ist, den die Beschichtungskante (B) der genannten Platte (P) zu überqueren geeignet ist, und an dem der Drehkörper (6) des genannten Fräswerkzeugs (5) geeignet ist, eingesetzt zu werden, um die genannte Beschichtungskante (B) zu fräsen;
wobei die Eingangsmündung (32) des genannten beweglichen Behälters (31) an mindestens einer Seite des Drehkörpers (6) im Verhältnis zu der genannten Drehachse (X) gegenüber dem genannten Arbeitsbereich (4) verläuft.

9. Betriebsmethode einer Kantenanleimmaschine (100) nach einem beliebigen der vorangegangenen Ansprüche, wobei diese Methode für Folgendes sorgt:
- Vorschub der genannten Platten (P) entlang der genannten Gleitbahn (102) von dem genannten Eingangskanal (103) zu dem genannten Ausgangskanal (104);
- Anleimen eines Abschnitts eines Randstreifens an einer Seite (L) der genannten Platte (P) in einer Weise, dass die Beschichtungskante (B) an der Seite (L) der genannten Platte (P) angebracht wird;
- Ansteuern des Drehkörpers (6) des genannten Fräswerkzeugs (5), damit dieser um die genannte Drehachse (X) dreht;
- Ansteuern des genannten beweglichen Schlittens (20), damit dieser entlang der genannten Übersetzungsbahn (19) bewegt wird, um der genannten Platte (P) zu folgen, die entlang der genannten Gleitbahn (102) befördert wird, bis der genannte Fräskopf (3) mindestens an eine Endkante (L) der genannten Platte (P) gebracht wird;
- wenn der genannte Fräskopf (3) sich an der Endkante der Seite (L) der genannten Platte (P) befindet, Ansteuern des genannten Fräskopfs (3) zum Drehen um die genannte Kippachse (Y), um den Einsatz des Drehkörpers (6) des genannten Fräswerkzeugs (5) auf der genannten Beschichtungskante (B) herbeizuführen und dabei Späne zu erzeugen; wobei der genannte Drehkörper (6) durch die Drehung eine Zentrifugaldruckwelle erzeugt, die geeignet ist, die genannten Späne über die genannte Eingangsmündung (32) in den genannten beweglichen Behälter (31) zu schieben;
- Anordnen des genannten Fräskopfs (3) in mindestens einer Ruheposition, in der die Ausgangsmündung (33) des genannten beweglichen Behälters (31) zu der Eingangsöffnung (35) der genannten Auffangwanne (34) gerichtet ist und das genannte Ausstoßventil (37) angesteuert wird, um in die genannte geöffnete Konfiguration bewegt zu werden, um die genannten Späne aus dem genannten beweglichen Behälter (31) in die genannte Auffangwanne (34) zu entladen.

10. Betriebsmethode nach Anspruch 9 zum Bedienen einer Kantenanleimmaschine (100) nach Anspruch 4 oder 5, **dadurch gekennzeichnet, dass**, wenn der genannte Fräskopf (3) sich in der genannten Ruheposition befindet, die genannten Drucklufteinspritzungselemente (42) angesteuert werden, um in dem genannten beweglichen Tank (31) einen zu der genannten Ausgangsmündung (33) gerichteten Druckluftstrom zu erzeugen und dieser Druckluftstrom den Sperrabschnitt (44) des genannten Ausstoßventils (37) in die genannte geöffnete Konfiguration bewegt, um das Austreten der genannten Späne über die genannte Ausgangsmündung (33) nach außerhalb des genannten beweglichen Behälters (31) zu gestatten.

## Revendications

1. Machine de placage de chants (100), qui comprend :
- un cadre support (101) muni d'une bande de coulissement (102) s'étendant entre un port d'entrée (103) et un port de sortie (104) ;
- des moyens d'avancement (105) destinés à faire avancer les panneaux (P) à travailler le long de la bande de coulissement (102) dudit cadre support (101) dudit port d'entrée (103) audit port de sortie (104) ;
- une unité de collage (109) montée sur ledit cadre support (101) le long de ladite bande de coulissement (102) et agencée pour encoller une lisière de finition sur l'un des côtés (L) dudit panneau (P) afin de former un bord de revêtement (B) ;
- un dispositif de fraisage (1) monté sur ledit cadre support (101) le long de ladite bande de coulissement (102) ;
dans laquelle ledit dispositif de fraisage (1) comprend :
- une structure de support (2), qui comprend un guide de transfert (19) fixé audit cadre support (101) et agencé de manière sensiblement parallèle à ladite bande de coulissement (102) ;
- un chariot mobile (20) monté par coulissement sur ledit guide de transfert (19) et pouvant être actionné pour coulisser lelong dudit guide de transfert (19) ;
- une tête de fraisage (3) montée en rotation sur ledit chariot mobile (20) autour d'un axe de renversement (Y) perpendiculaire audit guide de transfert (19) ;
- des moyens de mouvement (16) connectés de manière mécanique à ladite tête de fraisage (3) afin d'entrainer ladite tête de fraisage (3) pour tourner autour dudit axe de renversement (Y) pour au moins un trajet de rotation jusqu'à au moins une position de repos ;
- un outil de fraisage (5), qui est monté en rotation sur la tête de fraisage (3) et comprend un corps de rotation (6) muni d'un axe de rotation (X) et destiné à travailler sur le bord de revêtement (B) dudit panneau (P) ;
- des moyens d'actionnement (10) connectés de manière mécanique audit outil de fraisage (5) et destiné à faire tourner ledit corps de rotation (6) autour dudit axe de rotation (X) afin de fraiser le bord de revêtement (B) dudit panneau (P) avec la production conséquente de copeaux ;
- des moyens d'aspiration (30) associés de manière fonctionnelle à ladite tête de fraisage (3) afin d'évacuer, de ladite tête de fraisage (3), les copeaux produits par le corps de rotation (6) dudit outil de fraisage (5) ;
ladite machine de placage de chants (100) étant **caractérisée en ce que** lesdits moyens d'aspiration (30) comprennent :
- un réservoir mobile (31), qui est monté sur ladite tête de fraisage (3) et est muni d'une embouchure d'entrée (32), agencée sur le corps de rotation (6) dudit outil de fraisage (5) pour permettre aux copeaux générés par ledit corps de rotation (6) d'entrer dans ledit réservoir mobile (31), et d'une embouchure de sortie (33) pour évacuer lesdits copeaux dudit réservoir mobile (31) lorsque ladite tête de fraisage (3) est en position de repos ;
- un tube de collecte (34), qui est monté sur ladite structure de support (2), est mécaniquement séparé dudit réservoir mobile (31) et est muni d'une ouverture d'entrée (35), vers laquelle ladite embouchure de sortie (33) dudit réservoir mobile (31) est dirigée lorsque ladite tête de fraisage (3) est en position de repos, et avec une ouverture de sortie (36) destinée à être connectée à une installation d'aspiration destinée à créer une pression réduite dans ledit tube de collecte (34) ;
- une soupape d'expulsion (37) montée sur ledit réservoir mobile (31) et pouvant être actionnée pour être déplacée entre une configuration fermée, dans laquelle ladite soupape d'expulsion (37) prévient la sortie desdits copeaux par ladite embouchure de sortie (33), et une configuration ouverte, dans laquelle ladite tête de fraisage (3) est en position de repos, afin de permettre aux copeaux collectés dans ledit réservoir mobile (31) d'être expulsés par ladite embouchure de sortie (33) et transportés dans ledit tube de collecte (34).

2. Machine de placage de chants (100) selon la revendication 1, **caractérisée en ce que** lesdits moyens d'aspiration (30) comprennent des moyens (42) d'injection d'air comprimé connectés audit réservoir mobile (31) et agencés pour injecter, lorsque ladite tête de fraisage (3) est en position de repos, dans ledit réservoir mobile (31), un flux d'air pressurisé dirigé vers ladite embouchure de sortie (33).

3. Machine de placage de chants (100) selon la revendication 2, **caractérisée en ce que** lesdits moyens d'injection d'air comprimé (42) comprennent au moins une buse (43) montée sur ledit réservoir mobile (31), en communication avec l'intérieur dudit réservoir mobile (31) et connectée à une source d'air comprimé.

4. Machine de placage de chants (100) selon la revendication 2 ou 3, **caractérisée en ce que** ladite soupape d'expulsion (37) est équipée d'au moins une partie de blocage (44) agencée pour être mise en ladite configuration ouverte par ledit flux d'air pressurisé généré par lesdits moyens d'injection d'air comprimé (42), et pour revenir de manière élastique en ladite configuration fermée en l'absence dudit flux d'air pressurisé.

5. Machine de placage de chants (100) selon la revendication 4, **caractérisée en ce que** ladite au moins une partie de blocage (44) de ladite soupape d'expulsion (37) a la forme d'une lame flexible, qui est configurée de telle sorte que lorsque la lame flexible est soumise au flux d'air pressurisé généré par lesdits moyens d'injection d'air comprimé (42), elle est adaptée pour fléchir de manière élastique, ce qui met ladite soupape d'expulsion (37) en configuration ouverte.

6. Machine de placage de chants (100) selon l'une quelconque des revendications précédentes, **caractérisée en ce que** ladite soupape d'expulsion (37) est placée dans ledit réservoir mobile (31) au niveau de ladite embouchure de sortie (33).

7. Machine de placage de chants (100) selon l'une quelconque des revendications précédentes, **caractérisée en ce que** l'embouchure d'entrée (32) dudit réservoir mobile (31) s'étend autour du corps de rotation (6) dudit outil de fraisage (5) avec un angle d'entrée d'au moins 90 degrés ayant une pointe dans ledit axe de rotation (X).

8. Machine de placage de chants (100) selon l'une quelconque des revendications précédentes, **caractérisée en ce que** ladite tête de fraisage (3) est équipée d'une zone de fonctionnement (4), dans laquelle le bord de revêtement (B) dudit panneau (P) est susceptible de passer et dans laquelle le corps de rotation (6) dudit outil de fraisage (5) est susceptible de fonctionner pour fraiser ledit bord de revêtement (B) ;
dans laquelle l'embouchure d'entrée (32) dudit réservoir mobile (31) s'étend au moins sur un côté dudit corps de rotation (6) opposé à ladite zone de fonctionnement (4) par rapport audit axe de rotation (X).

9. Procédé d'utilisation de ladite machine de placage de chants (100) selon l'une quelconque des revendications précédentes, le procédé comprenant les étapes consistant à :
- faire avancer les panneaux (P) le long de ladite bande de coulissement (102) depuis ledit port d'entrée (103) vers ledit port de sortie (104) ;
- encoller une partie d'une bordure d'un côté (L) dudit panneau (P) de manière à attacher un bord de revêtement (B) sur le côté (L) dudit panneau (P) ;
- actionner le corps de rotation (6) dudit outil de fraisage (5) pour qu'il tourne autour dudit axe de rotation (X) ;
- actionner ledit chariot mobile (20) pour le déplacer le long dudit guide de transfert (19) afin de suivre ledit panneau (P) qui avance le long de ladite bande de coulissement (102) jusqu'à poser ladite tête de fraisage (3) sur au moins un bord du côté (L) dudit panneau (P) ;
- lorsque ladite tête de fraisage (3) se trouve sur le bord terminal du côté (L) dudit panneau (P), actionner ladite tête de fraisage (3) pour qu'elle tourne autour de l'axe de renversement (Y) pour que le corps de rotation (6) dudit outil de fraisage (5) agisse sur ledit bord de revêtement (B), en générant des copeaux ; dans lequel ledit corps de rotation (6), par rotation, génère une onde de pression centrifuge destinée à pousser lesdits copeaux dans ledit réservoir mobile (31) par ladite embouchure d'entrée (32) ;
- agencer ladite tête de fraisage (3) en au moins une position de repos, dans laquelle l'embouchure de sortie (33) dudit réservoir mobile (31) est dirigée vers l'ouverture d'entrée (35) dudit tube de collecte (34) et ladite soupape d'expulsion (37) est actionnée pour être déplacée en ladite configuration ouverte pour décharger lesdits copeaux dudit réservoir mobile (31) dans ledit tube de collecte (34).

10. Procédé d'utilisation selon la revendication 9 pour l'utilisation d'une machine de placage de chants (100) selon la revendication 4 ou 5, **caractérisé en ce que**, lorsque ladite tête de fraisage (3) est en position de repos, lesdits moyens d'injection d'air comprimé (42) sont actionnés pour générer, dans ledit réservoir mobile (31), un flux d'air pressurisé dirigé vers ladite embouchure d'ouverture (33), et ledit flux d'air pressurisé déplace la partie de blocage (44) de ladite soupape d'expulsion (37) en ladite configuration ouverte afin de permettre la sortie desdits copeaux hors du réservoir mobile (31) par ladite embouchure de sortie (33).
